# EUROPEAN PATENT APPLICATION

(11) **EP 4 502 549 A1**
(43) Date of publication of application: **05.02.2025**
(21) Application number: 23779042.3
(22) Date of filing: 21.02.2023
(51) Int. Cl.: G01F 1/00, G01F 3/22, G01F 15/12

(54) **DUST COLLECTION ADAPTER**

(30) Priority: 30.03.2022 JP 2022054950
(71) Applicant: PANASONIC INTELLECTUAL PROPERTY MANAGEMENT CO., LTD., Kadoma-shi Osaka 571-0057 (JP)
(72) Inventor: FUKUI, Hiroto, Osaka 571-0057 (JP); GYOUTOKU, Taiti, Osaka 571-0057 (JP)
(74) Representative: SSM Sandmair
(86) International application number: PCT/JP2023/006118
(87) International publication number: WO 2023/189012

(57) **Abstract**

A dust collection adapter (10) according to the present disclosure includes: a main body (11, 12); an internal flow path (19) that is located in an interior of the main body (11, 12) and through which a gas flows; and a plurality of ribs (17, 18) that are located in the internal flow path (19) and with which the gas introduced into the internal flow path (19) collides. The dust collection adapter (10) is mounted on an adapter-receiving component located at an inlet of a gas meter. The adapter-receiving component may be, for example, a shut-off valve (20).

## Description

### Technical Field

The present disclosure relates to a dust collection adapter to be attached at an inlet of a gas meter.

### Background Art

Patent Literature 1 discloses a gas meter including: a shut-off valve located at a flow inlet of the gas meter; and a dust collection adapter attached to the shut-off valve to collect dust contained in a gas. In the gas meter, dust contained in the gas passing through the shut-off valve is collected by the dust collection adapter. This can prevent a reduction in measurement accuracy of a measurement unit of the gas meter.

### Citation List

### Patent Literature

PTL 1: Chinese Utility Model No. 214702382

### Summary of Invention

### Technical Problem

The present disclosure provides a dust collection adapter easily attachable at an inlet of a gas meter to collect dust contained in a gas.

### Solution to Problem

A dust collection adapter according to the present disclosure includes: a main body; an internal flow path that is located in an interior of the main body and through which a gas flows; and a plurality of ribs that are located in the internal flow path and with which the gas introduced into the internal flow path collides, wherein the dust collection adapter is mounted on an adapter-receiving component located at an inlet of a gas meter.

The above and further objects, features and advantages of the present disclosure will be more apparent from the following detailed description of preferred embodiments with reference to the accompanying drawings.

### Advantageous Effects of Invention

The present invention can provide a dust collection adapter configured as described above which is easily attachable at an inlet of a gas meter to collect dust contained in a gas.

### Brief Description of Drawings

FIG. 1 is a perspective view showing an example of the configuration of a dust collection adapter according to Embodiment 1 of the present disclosure.
FIG. 2 is a perspective view showing an example of the configuration of a main body segment A of the dust collection adapter of FIG. 1.
FIG. 3 is a side cross-sectional view showing an example of the dust collection adapter of FIG. 1 as mounted on a shut-off valve.
FIG. 4A is an exploded perspective view showing an example of how to mount the dust collection adapter of FIG. 1 on a shut-off valve, and FIG. 4B is a perspective view showing an example of the dust collection adapter of FIG. 4A as mounted on the shut-off valve.
FIG. 5 is a cross-sectional view showing an example of the configuration of a gas meter on which the dust collection adapter of FIG. 1 is mounted.
FIG. 6 is a perspective view showing an example of the configuration of a dust collection adapter according to Embodiment 2 of the present disclosure.
FIG. 7 is a perspective view showing an example of the configuration of a main body segment A of the dust collection adapter of FIG. 6.
FIG. 8 is a side cross-sectional view showing an example of the dust collection adapter of FIG. 6 as mounted on a shut-off valve.
FIG. 9A is an exploded perspective view showing an example of how to mount the dust collection adapter of FIG. 61 on a shut-off valve, and FIG. 9B is a perspective view showing an example of the dust collection adapter of FIG. 9A as mounted on the shut-off valve.
FIG. 10 is a cross-sectional view showing an example of the configuration of a gas meter on which the dust collection adapter of FIG. 6 is mounted.

### Description of Embodiments

### (Findings on which the present disclosure is based)

A gas meter is required to pass a specified dust test. This is based on the premise that a gas which is a fluid to be measured contains dust. To pass the dust test, for example, the gas meter needs to be equipped with a filter for dust removal or have a structural design suitable for dust collection.

However, providing such a filter or structural design to the gas meter can lead to increased cost.

The present disclosure has been made to solve the above problem, and an object of the present disclosure is to provide a dust collection adapter that is easily attachable to a gas meter and that allows for a reduction in cost increase.

Specifically, a dust collection adapter according to the present disclosure includes: a main body; an internal flow path that is located in an interior of the main body and through which a gas flows; and a plurality of ribs that are located in the internal flow path and with which the gas introduced into the internal flow path collides. The dust collection adapter is mounted on an adapter-receiving component located at an inlet of a gas meter.

The dust collection adapter according to the present disclosure, which includes the ribs located in the flow path through which a gas flows as a fluid to be measured, can collect dust contained in the to-be-measured fluid by allowing the dust to collide with the ribs. Thus, the dust collection adapter can successfully remove the dust contained in the to-be-measured fluid. This can successfully reduce or eliminate the risk of dust deposition on a measurement flow path of a flow rate measurement unit of the gas meter. As a result, the flow rate measurement unit can maintain the required measurement accuracy over a long period of time.

The dust collection adapter disclosed in Patent Literature 1 includes a large number of small-diameter holes as elements for dust collection. This configuration suffers from a high pressure loss accompanying the flow of the fluid to be measured. In contrast, the dust collection adapter according to the present disclosure includes the ribs located in the interior of the main body and thus can ensure a sufficient area of the passage through which the fluid to be measured flows. This can lead to a relatively low pressure loss accompanying the flow of the fluid to be measured.

Hereinafter, exemplary embodiments of the present disclosure will be described with reference to the drawings. The same or like elements are denoted by the same reference signs throughout the drawings and will not be described repeatedly. This is in order to prevent the following description from being unnecessarily lengthy and make the following description easier for those skilled in the art to understand.

The contents of the following description and the drawings are provided to allow those skilled in the art to fully understand the present disclosure. The contents of the following description and the drawings are not intended to limit the subject matter defined by the appended claims.

### (Embodiment 1)

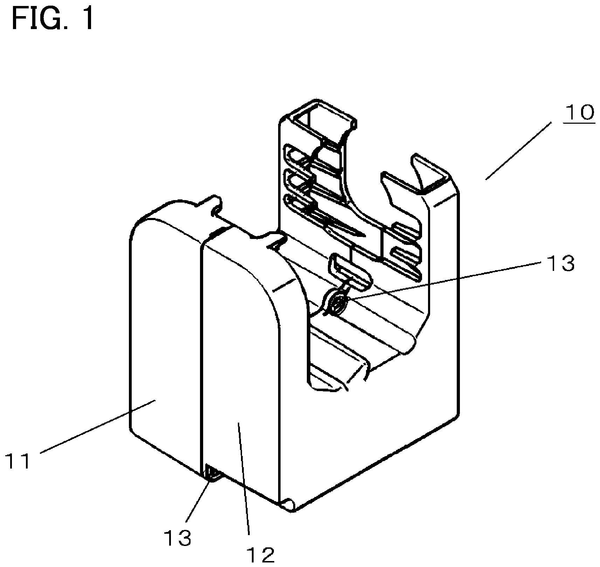

A typical example of a dust collection adapter according to Embodiment 1 of the present disclosure will be described in detail with reference to FIGS. 1 to 6.

### [Example of configuration of dust collection adapter]

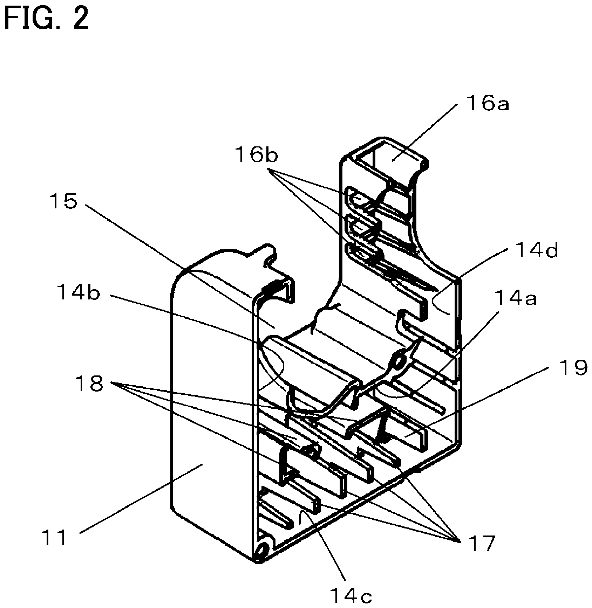

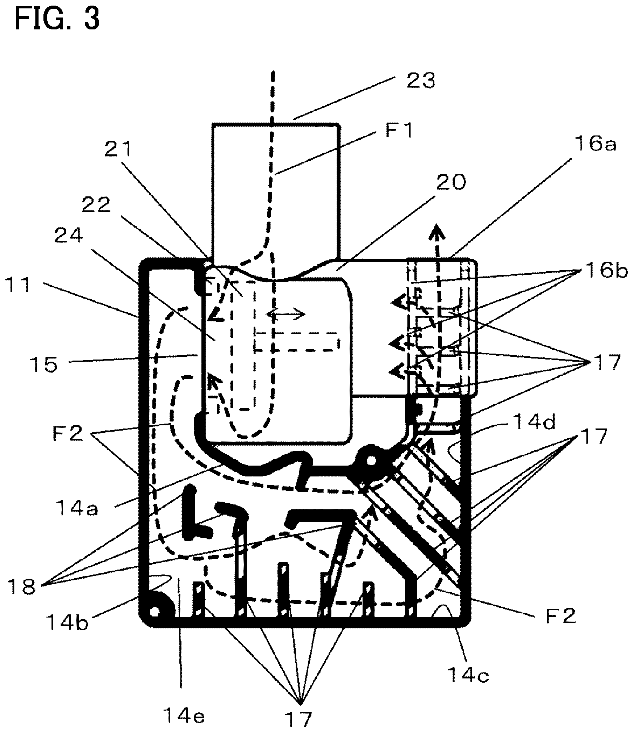

FIG. 1 is a perspective view showing an example of the configuration of a dust collection adapter 10 according to Embodiment 1. FIG. 2 is a perspective view showing an example of the configuration of a main body segment A11 of the dust collection adapter 10. FIG. 3 is a side cross-sectional view showing an example of the main body segment A11 as mounted on a shut-off valve 20.

As shown in FIG. 1, the dust collection adapter 10 according to Embodiment 1 includes the main body segment A11 and a main body segment B 12. The main body segments A11 and B12 are generally shaped to be symmetrical and joined together in face-to-face contact by means of screws 13.

As shown in FIG. 1, a lower portion of the dust collection adapter 10 (lower portion as viewed in FIG. 1) is generally shaped as a rectangular parallelepiped. For convenience of explanation, the lower portion generally shaped as a rectangular parallelepiped will be referred to as "box-shaped lower portion". An upper portion of the dust collection adapter 10 (upper portion as viewed in FIG. 1) is shaped as a pair of plates extending upward from the upper surface of the box-shaped lower portion. For convenience of explanation, one of the pair of plate-shaped upper portions will be referred to as "front upper portion", and the other plate-shaped upper portion will be referred to as "rear upper portion". There is a space between the front and rear upper portions. As described later, an adapter-receiving component of a gas meter is fitted in this space.

In the following description, the configuration of the dust collection adapter 10 will be described with reference to the main body segment A11 shown in FIG. 2. The flow of a gas introduced into the dust collection adapter 10 will be described with reference to the side cross-sectional view of FIG. 3. In Embodiment 1, as shown in FIG. 3, a shut-off valve 20 will be described as an example of that adapter-receiving component of the gas meter on which the dust collection adapter 10 is mounted. The rear upper portion includes a space in which a portion of the shut-off valve 20 is fitted. The adapter-receiving component is not limited to the shut-off valve 20. Any suitable component of the gas meter may be employed as the adapter-receiving component depending on the details of the configuration of the gas meter, and the dust collection adapter 10 can be designed to have a shape conforming to the shape of the adapter-receiving component.

FIG. 2 is a perspective view showing the main body segment A11 to illustrate the internal configuration of the dust collection adapter 10. As shown in FIG. 2, the interior of the dust collection adapter 10 includes an upper inner wall surface 14a, a front inner wall surface 14b, a lower inner wall surface 14c, and a rear inner wall surface 14d and further includes a plurality of ribs 17 and 18.

The upper inner wall surface 14a forms the upper surface of the box-shaped lower portion. The front inner wall surface 14b forms the front surface of the dust collection adapter 10 which extends over the box-shaped lower portion and the plate-shaped front upper portion. The lower inner wall surface 14c forms the lower surface of the box-shaped lower portion, i.e., the lower surface of the dust collection adapter 10. The rear inner wall surface 14d forms the rear surface of the dust collection adapter 10 which extends over the box-shaped lower portion and the plate-shaped rear upper portion. In FIG. 2, the interior of the main body segment A1 1 is shown as extending forward and rightward. On the exterior of the main body segment A1 1 there is a side wall that forms the side surfaces of the box-shaped lower portion and the pair of upper portions. The upper inner wall surface 14a, the front inner wall surface 14b, the lower inner wall surface 14c, the rear inner wall surface 14d, and the inner surface of the side wall (side wall inner surface 14e shown in FIG. 3) constitute the inner wall of the dust collection adapter 10.

The ribs 17 and 18 located in the interior of the dust collection adapter 10 project inward from the side wall of the box-shaped lower portion. In Embodiment 1, the ribs 17 extend perpendicular to the flow direction in which a gas flows. The ribs 17 have different widths, but some of the ribs 17 may have the same width. The ribs 18 are shaped to extend along the flow of the gas. Thus, these ribs 17 and 18 form an internal flow path 19 through which the gas flows in the dust collection adapter 10 (in particular, in the box-shaped lower portion). Thus, the interior of the dust collection adapter 10 includes the inner wall and the internal flow path 19.

The dust collection adapter 10 includes a flow inlet 15 and flow outlets 16a and 16b to allow the gas to flow through the interior of the dust collection adapter 10. In Embodiment 1, as shown in FIG. 2, the flow inlet 15 is located on the surface (opposed surface) of the front upper portion that is opposed to the rear upper portion. The flow outlets 16a and 16b are located in the rear upper portion. The flow outlet 16a is located on the upper surface of the plated-shaped rear upper portion, and the flow outlet 16b is located on the surface (opposed surface) of the rear upper portion that is opposed to the front upper portion.

In the example of FIG. 2, the rear upper portion of the main body segment A1 1 includes a cut conforming to a portion of the adapter-receiving component (shut-off valve 20 in Embodiment 1). As shown in FIG. 1, since the main body segments A11 and B12 are fixed (joined) together in face-to-face contact, the rear upper portion is laterally divided into two parts. Between the two parts of the rear upper portion there is a space in which a portion of the adapter-receiving component is fitted. The flow outlet 16a is located on the upper surface of the divided rear upper portion. The flow outlet 16b is located on the opposed surface of the divided rear upper portion. In the example of FIG. 1 or 2, the ribs 17 projecting laterally are located at the flow outlet 16b.

In the example of FIG. 3, the flow inlet 15 is opposed to an outlet 24 of the shut-off valve 20 which is the adapter-receiving component of the gas meter. A gas is introduced from the shut-off valve 20 into the dust collection adapter 10 through the flow inlet 15 of the front upper portion, and the gas flows through the interior of the box-shaped lower portion, i.e., the internal flow path 19, to reach the rear upper portion. As previously described, the rear upper portion includes the flow outlets 16a and 16b. The flow outlets 16a and 16b serve to allow the gas introduced into the dust collection adapter 10 through the flow inlet 15 to be discharged into the gas meter.

For example, as shown in FIG. 3, the dust collection adapter 10 is mounted on the shut-off valve 20. Specifically, the dust collection adapter 10 is disposed to hold the shut-off valve 20 between the front upper portion and the rear upper portion. The rear upper portion is laterally divided into two parts as previously described, and a portion (rear portion) of the shut-off valve 20 is held between the two parts of the divided rear upper portion. Thus, the upper portion of the dust collection adapter 10 can be regarded as a "mounting portion" for mounting on the adapter-receiving component of the gas meter.

FIG. 3 shows only the main body segment A11 as a component of the dust collection adapter 10. As previously described, the main body segment B12 is generally shaped to be symmetrical to the main body segment A11. The black-highlighted portions in FIG. 3 are portions where the main body segments A11 and B12 contact each other at their ribs 17 and 18 and outer walls.

As shown in FIG. 3, the shut-off valve 20 includes two tubular portions coupled generally at a right angle and further includes a valve element 21 and a valve seat 22 inside a coupling portion at which the two tubular portions are coupled. A gas inlet 23 is located at an end of one of the tubular portions (the tubular portion extending vertically in FIG. 3), and the gas outlet 24 is located on a surface of the coupling portion that faces away from the other tubular portion. The valve seat 22 is located inside the outlet 24.

The valve element 21 is driven by a motor (not shown) to move into contact with or away from the valve element 21. With the valve element 21 in contact with the valve seat 22, the flow of the gas is blocked. With the valve element 21 away from the valve seat 22, as shown by the dashed arrows F1 in FIG. 3, the gas flowing into the shut-off valve 20 through the inlet 23 is discharged through the outlet 24.

As previously described and shown in FIG. 3, the flow inlet 15 of the dust collection adapter 10 is opposed to the outlet 24 of the shut-off valve 20. As shown by the dashed arrows F2 in FIG. 3, the gas is delivered from the outlet 24 of the shut-off valve 20 to the flow inlet 15 of the front upper portion. As shown by the dashed arrows F2, the gas moves from the front upper portion to the internal flow path 19 in the box-shaped lower portion, flows through the internal flow path 19 in the box-shaped lower portion, reaches the internal flow path 19 in the rear upper portion, and is discharged through the flow outlets 16a and 16b. Thus, the lower portion of the dust collection adapter 10 can be regarded as a "flow path portion" including most of the internal flow path 19. Another portion of the internal flow path 19 is located in the front or rear upper portion, and it is not only the "flow path portion" that includes the internal flow path 19.

As shown in FIG. 3, the ribs 17 and 18 are located in the internal flow path 19. In the box-shaped lower portion, the ribs 18 vertically divide the gas stream introduced through the flow inlet 15 into two streams as shown by the dashed arrows F2. Thus, the ribs 18 function to form the internal flow path 19. The ribs 17 are arranged to cross the gas streams shown by the dashed arrows F2. The gas streams collide with the ribs 17, and thus dust contained in the gas can be collected by the ribs 17. That is, the ribs 17 function to collect dust.

In the example of FIG. 3, as shown by the dashed arrows F2, a total of three gas streams are formed in the box-shaped lower portion of the main body segment A11 (dust collection adapter 10), and the three gas streams include a gas stream flowing along the upper inner wall surface 14a, a gas stream flowing along the lower inner wall surface 14c, and a gas stream flowing between these two streams. For convenience of explanation, the gas stream flowing along the upper inner wall surface 14a will be referred to as an "upper gas stream", the gas stream flowing along the lower inner wall surface 14c will be referred to as a "lower gas stream", and the gas stream flowing between the upper and lower gas streams will be referred to as a "middle gas stream".

The gas stream introduced through the flow inlet 15 is divided by the ribs 18 into the upper and middle gas streams. The middle gas stream is divided by the ribs 18 and the ribs 17 to generate the lower gas stream. Thus, not only the ribs 18 but also the ribs 17 function to form the internal flow path 19. In the example of FIG. 3, the lower gas stream collides with the ribs 17 while flowing, whereas the middle gas stream collides with not only the ribs 17 but also the ribs 18 while flowing. Thus, not only the ribs 17 but also the ribs 18 function to collect dust. In this way, the ribs 17 and 18 function to divide a gas stream into a plurality of gas streams flowing through different routes in the box-shaped lower portion and at the same time function to collect dust by collision of the gas streams with the ribs 17 and 18.

In the example of FIG. 3, the ribs 18 are located in an upstream region of the box-shaped lower portion in the gas flow direction in which the gas flows through the internal flow path 19; that is, the ribs 18 in the box-shaped lower portion are located in a region relatively close to the front upper portion (or the flow inlet 15). The ribs 17 are densely arranged in a downstream region in the gas flow direction, i.e., in a region relatively close to the rear upper portion (or the flow outlets 16a and 16b). The internal flow path 19 extends over the box-shaped lower portion and the rear upper portion, and the ribs 17 are densely arranged also in the rear upper portion. Furthermore, the ribs 17 are densely arranged in proximity to the lower inner wall surface 14c of the box-shaped lower portion. Thus, the ribs 18 functioning to form the internal flow path 19 and the ribs 17 functioning to collect dust can perform their respective functions effectively.

As described above, the dust collection adapter 10 includes the generally U-shaped internal flow path 19 extending from the front upper portion to the rear upper portion through the box-shaped lower portion. This ensures a sufficient length of flow path while achieving a compact configuration. The sufficient length of the internal flow path 19 makes it possible to include a sufficient number of ribs 17 that collect dust contained in the gas.

Although in the example of FIG. 3 the ribs 17 and 18 are not located in the front upper portion, the ribs 17 and 18 may be located, as necessary, in the front upper portion. The ribs 17 and 18 in the internal flow path 19 are not limited to having particular features. For example, the dimensions of the ribs 17 and 18 may be chosen in view of a pressure loss which occurs in the internal flow path 19. Although the ribs 17 and 18 are plate-shaped in Embodiment 1, they are not limited to having such shapes. Either or both the ribs 17 and 18 may be pillar-shaped or may have any other shape.

### [Example in which dust collection adapter is applied to gas meter]

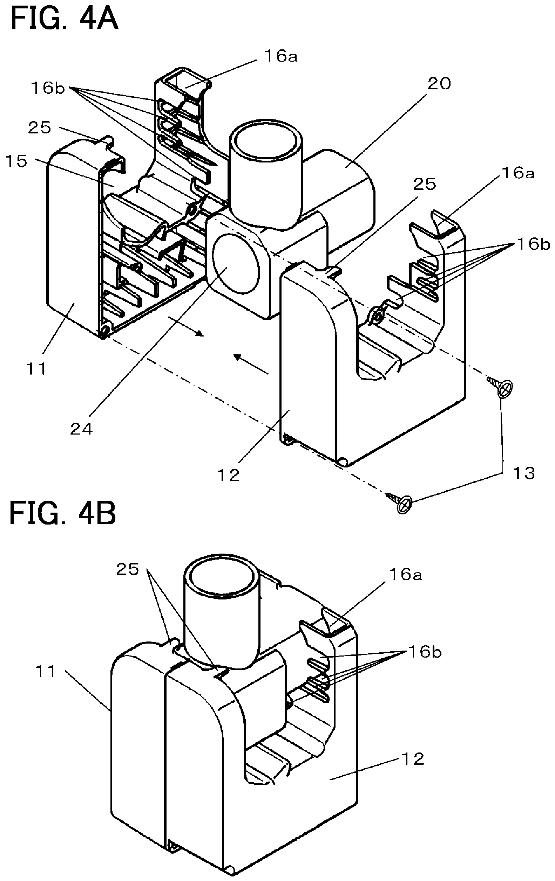

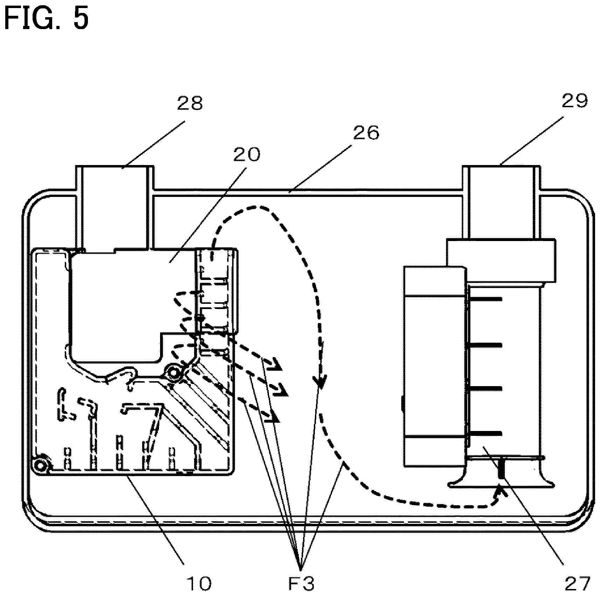

FIGS. 4A and 4B are perspective views showing an example of how the dust collection adapter 10 is mounted on the shut-off valve 20. FIG. 5 is a cross-sectional view showing an example of a gas meter 26 including the shut-off valve 20 on which the dust collection adapter 10 is mounted.

As shown in FIG. 4A, the dust collection adapter 10 is divided at the center into the two main body segments A11 and B12. In Embodiment 1, the main body segments A11 and B12 are made of resin. As previously described, the main body segments A11 and B12 are generally shaped to be symmetrical about a plane in which they are joined together.

In the example of FIG. 4A, the main body segments A11 and B12 are placed, respectively, on opposite sides of the shut-off valve 20 (for example, in the lateral direction) to face each other across the shut-off valve 20. Next, as shown in FIG. 4B, the main body segments A11 and B12 are mounted, respectively, on the opposite sides of the shut-off valve 20 and are joined together by means of screws 13. Thus, the main body segments A11 and B12 are combined to function as the dust collection adapter 10.

In Embodiment 1, the dust collection adapter 10 includes protrusions 25 located above the flow inlet 15 (in particular, at the upper edge of the opposed surface of the front upper portion). The protrusions 25 are included, respectively, in the main body segments A11 and B12. As shown in FIG. 4B, when the dust collection adapter 10 is mounted in the manner described above, the protrusions 25 are in contact with the upper surface of a front portion of the shut-off valve 20.

The flow outlet 16a is curved along the outer periphery of a rear portion of the shut-off valve 20. The flow outlet 16b is also curved. As previously described, the rear upper portion includes a cut conforming to the rear portion of the shut-off valve 20. Thus, both the flow outlet 16a located on the upper surface of the rear upper portion and the flow outlet 16b located on the opposed surface of the rear upper portion are shaped to conform to the shape of the rear portion of the shut-off valve 20. For this reason, as shown in FIG. 4B, the rear upper portion including the flow outlets 16a and 16b successfully engages with the shut-off valve 20 when the main body segments A11 and B12 are joined together.

As described above, the dust collection adapter 10 can be attached to the adapter-receiving component (shut-off valve 20) by placing the two separate main body segments A11 and B12 in such a manner as to hold the adapter-receiving component between the main body segments A11 and B12 and then joining the main body segments A11 and B12 together. Although in Embodiment 1 the main body segments A11 and B12 are joined together by means of the screws 13, the joining of the main body segments A11 and B12 is not limited to using the screws 13. For example, another known joining means such as snap-fit or bonding with an adhesive can be used as appropriate.

As shown in FIG. 5, the gas meter 26 according to Embodiment 1 includes the shut-off valve 20 and a flow rate measurement unit 27. The gas meter 26 includes a housing, in which the shut-off valve 20 and the flow rate measurement unit 27 are enclosed. In the example of FIG. 5, the shut-off valve 20 and a gas inlet 28 are located in proximity to one inner side surface (left inner side surface in FIG. 5) of the housing of the gas meter 26, and the flow rate measurement unit 27 and a gas outlet 29 are located in proximity to the opposite inner side surface (right inner side surface in FIG. 5) of the housing of the gas meter 26.

The shut-off valve 20 is located at the gas inlet 28 of the gas meter 26. The dust collection adapter 10 according to Embodiment 1 is mounted on the shut-off valve 20. The flow rate measurement unit 27 is located at the gas outlet 29 of the gas meter 26. The flow rate measurement unit 27 is not limited to having particular features. Typical examples of the flow rate measurement unit 27 include an ultrasonic measurement unit using ultrasonic propagation time measurement and an electronic measurement unit such as a thermal measurement unit.

Once the shut-off valve 20 of the gas meter 26 is opened and a gas flows into the gas meter 26 through the gas inlet 28, the gas, as previously described, flows from the flow inlet 15 to the internal flow path 19 in the dust collection adapter 10, passes through the internal flow path 19, and is discharged into the gas meter 26 through the flow outlets 16a and 16b. As shown by the dashed arrows F3 in FIG. 5, the gas emitted from the flow outlet 16a located on the upper surface of the rear upper portion of the dust collection adapter 10 and the gas emitted from the flow outlet 16b located on the opposed surface of the rear upper portion flow in the housing of the gas meter 26 and reach the flow rate measurement unit 27.

The flow rate measurement unit 27 is connected to the gas outlet 29. In the example of FIG. 5, the gas flow inlet (inlet) of the flow rate measurement unit 27 is located inside the housing of the gas meter 26 and faces downward. The gas flow outlet (outlet) of the flow rate measurement unit 27 is connected to the gas outlet 29 located in an upper portion of the housing of the gas meter 26. The gas flows into the flow rate measurement unit 27 through the gas flow inlet, the gas flow rate is measured by the flow rate measurement unit 27, and the gas is discharged through the gas outlet 29.

As described above, the gas introduced into the gas meter 26 through the gas inlet 28 first passes through the internal flow path 19 of the dust collection adapter 10 and then is emitted into the gas meter 26 and flows into the flow rate measurement unit 27. Thus, dust contained in the gas is removed in the internal flow path 19 of the dust collection adapter 10 before the gas is emitted into the housing of the gas meter 26. Hence, the gas flowing into the flow rate measurement unit 27 can be considered, for example, to contain very little dust or to be substantially free of dust. This can reduce dust deposition on the measurement flow path of the flow rate measurement unit 27. As a result, the flow rate measurement unit 27 can successfully measure the gas flow rate over a long period of time.

### [Working mechanism of dust collection adapter]

The following will describe the working mechanism of the dust collection adapter 10 according to Embodiment 1 which is configured as described above.

In the internal flow path 19 of the dust collection adapter 10, as shown in FIG. 3, there are the ribs 18 which function as a part of the flow path and the ribs 17 which function to allow the flowing gas to collide therewith.

The gas flowing into the dust collection adapter 10 is deflected and divided into a plurality of streams by the ribs 18. Thus, the gas is diffused over the internal flow path 19 (or the interior of the dust collection adapter 10). The diffused gas meanders while colliding with the ribs 17 located in the internal flow path 19 and reaches the flow outlets 16a and 16b.

In a case where the gas contains dust, the collision of the gas with the ribs 17 leads to the contained dust being collected (removed) by the ribs 17. Since the flowing gas meanders due to the presence of the ribs 17, the duct collection takes place as the gas flows. Thus, the dust contained in the gas can be gradually removed by the ribs 17 and 18 during a period in which the gas flows from the flow inlet 15 to the flow outlets 16a and 16b.

### [Benefits of dust collection adapter]

As described above, in Embodiment 1, the dust collection adapter 10 is mountable at the gas inlet 28 of the gas meter 26 and includes the internal flow path 19 located in the interior of the main body of the dust collection adapter 10 and the ribs 17 and 18 that are located in the internal flow path 19 and with which a gas introduced into the internal flow path 19 collides. The dust collection adapter 10 is mounted on the shut-off valve 20 which is an adapter-receiving component located at the gas inlet 28 of the gas meter 26.

Thus, dust contained in the gas can be successfully collected. This allows the flow rate measurement unit 27 of the gas meter 26 to perform reliable flow rate measurement over a long period of time. The internal flow path 19 has a sufficient passage area to ensure a relatively low pressure loss.

As in Embodiment 1, the main body of the dust collection adapter 10 may be divided into the two main body segments A11 and B 12, and the dust collection adapter 10 may be mounted on the adapter-receiving component by coupling the two main body segments together.

In this case, for example, each of the main body segments A11 and B12 can easily be formed by resin molding. In addition, for example, the main body segments A11 and B12 can be joined together after they are placed so as to hold the adapter-receiving component therebetween, and this makes easier the mounting of the dust collection adapter 10 on the adapter-receiving component.

The adapter-receiving component may be the shut-off valve 20 located at the gas inlet 28 of the gas meter 26 to block a gas, and the gas passing through the shut-off valve 20 may be introduced into the internal flow path 19.

This eliminates the need for the gas meter 26 to include another adapter-receiving component. Thus, the gas meter 26 can be compactified.

### (Embodiment 2)

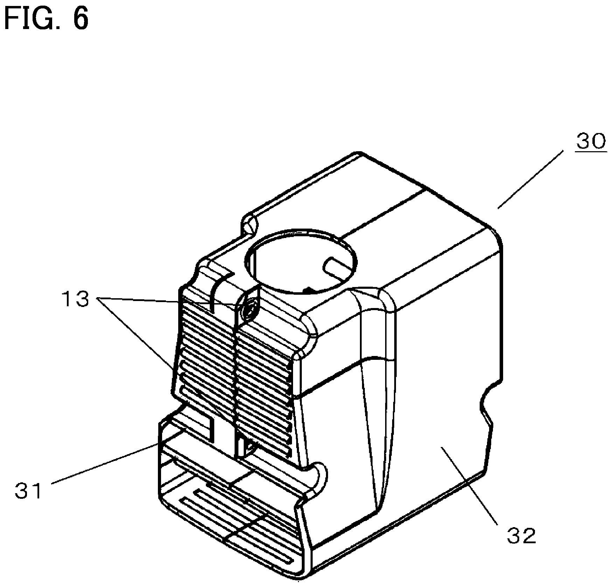

A typical example of a dust collection adapter according to Embodiment 2 of the present disclosure will be described in detail with reference to FIGS. 6 to 10.

### [Configuration of dust collection adapter]

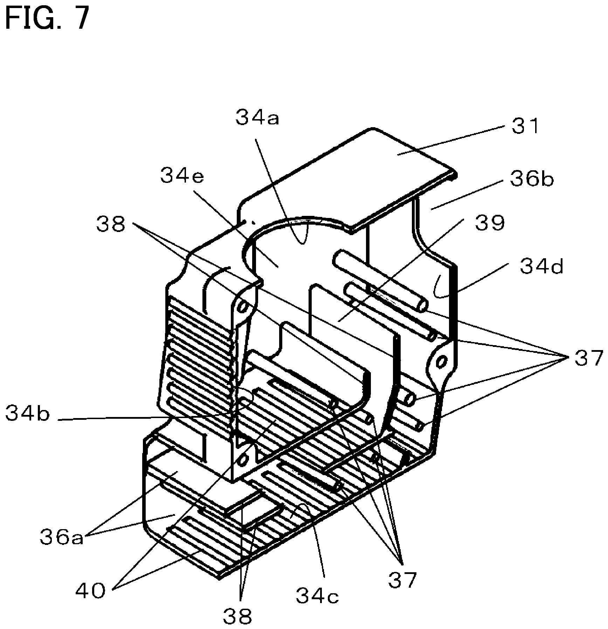

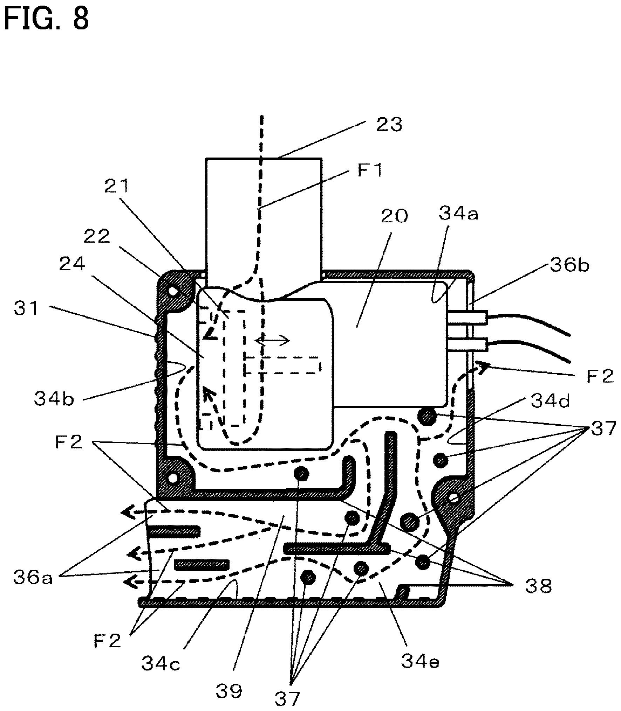

FIG. 6 is a perspective view showing an example of the configuration of a dust collection adapter 30 according to Embodiment 2. FIG. 7 is a perspective view showing an example of the configuration of a main body segment A31 of the dust collection adapter 30. FIG. 8 is a side cross-sectional view showing an example of the main body segment A31 as mounted on the shut-off valve 20.

As shown in FIG. 6, the dust collection adapter 30 according to Embodiment 2 includes the main body segment A31 and a main body segment B32. The main body segments A31 and B32 are generally shaped to be symmetrical and joined together in face-to-face contact by means of screws 13.

As shown in FIG. 6, the dust collection adapter 30 is generally shaped as a single rectangular parallelepiped on the whole. As described later, the upper portion of the main body of the dust collection adapter 30 is a portion for mounting on the shut-off valve 20; thus, for convenience of explanation, the upper portion of the main body will be referred to as "mounting portion". As described later, the lower portion of the main body of the dust collection adapter 30 is a portion for forming an internal flow path; thus, for convenience of explanation, the lower portion of the main body will be referred to as "flow path portion".

In the following description, the configuration of the dust collection adapter 30 will be described with reference to the main body segment A31 shown in FIG. 7. The flow of a gas introduced into the dust collection adapter 30 will be described with reference to the side cross-sectional view of FIG. 8. In Embodiment 2, as in Embodiment 1 described above, the shut-off valve 20 will, as shown in FIG. 8, be described as an example of that adapter-receiving component of the gas meter on which the dust collection adapter 30 is mounted.

FIG. 7 is a perspective view showing the main body segment A31 to illustrate the internal configuration of the dust collection adapter 30. As shown in FIG. 7, the interior of the dust collection adapter 30 includes an upper inner wall surface 34a, a front inner wall surface 34b, a lower inner wall surface 34c, and a rear inner wall surface 34d and further includes a plurality of ribs 37 and 38.

The upper inner wall surface 34a forms the upper surface of the mounting portion, i.e., the upper surface of the dust collection adapter 30. The front inner wall surface 34b forms the front surface of the mounting portion. The lower inner wall surface 34c forms the lower surface of the flow path portion, i.e., the lower surface of the dust collection adapter 30. The rear inner wall surface 34d forms the rear surfaces of the mounting portion and the flow path portion, i.e., the rear surface of the dust collection adapter 30. In FIG. 7, the interior of the main body segment A31 is shown as extending forward and rightward. On the exterior of the main body segment A31 there is a side wall that forms the side surfaces of the mounting portion and the flow path portion. The inner surface of the side wall is a side wall inner surface 34e shown in FIG. 7. The upper inner wall surface 34a, the front inner wall surface 34b, the lower inner wall surface 34c, the rear inner wall surface 34d, and the side wall inner surface 34e constitute the inner wall of the dust collection adapter 30.

The ribs 37 and 38 located in the interior of the dust collection adapter 30 project inward from the side wall inner surface 34e of the main body segment A31. The ribs 37 are cylindrical and, in Embodiment 2, extend perpendicular to the flow direction in which a gas flows. Alternatively, the ribs 37 may be located so as to divide the flow of the gas into a plurality of streams. The ribs 37 have different diameters, but some of the ribs 37 may have the same diameter. The ribs 38 are shaped to extend along the flow of the gas. Thus, these ribs 37 and 38 form an internal flow path 39 through which the gas flows in the dust collection adapter 30 (in particular, in the flow path portion). Thus, the interior of the dust collection adapter 30 includes the inner wall and the internal flow path 39.

The dust collection adapter 30 includes flow outlets 36a and 36b to allow the gas to flow through the interior of the dust collection adapter 30. In Embodiment 2, as shown in FIG. 7, the flow outlet 36a is located below the front inner wall surface 34b of the dust collection adapter 30, i.e., below the mounting portion. The location of the flow outlet 36a is on the front surface of the flow path portion, i.e., on the front surface of the lower portion of the dust collection adapter 30. The flow outlet 36b is located on the rear surface of the upper portion of the dust collection adapter 40. The location of the flow outlet 36b is on the rear surface of the mounting portion.

Furthermore, as shown in FIG. 7, there are a plurality of grooves 40 on the surfaces of the ribs 38 and on the lower inner wall surface 34c. The grooves 40 need not be present on the surfaces of all of the ribs 38. In the example of FIG. 7, the grooves 40 are present on the surface of the rib 38 that divides the mounting portion, which is the upper portion of the main body of the dust collection adapter 30, from the flow path portion which is the lower portion of the main body of the dust collection adapter 30. The grooves 40 are also present on the surface of the rib 38 that is located in the flow path portion. There are no grooves 40 on the surfaces of the ribs 38 adjacent or close to the flow outlet 36a.

Unlike the dust collection adapter 10 according to Embodiment 1 described above, the dust collection adapter 30 according to Embodiment 2 does not include any "flow inlet". This is because in Embodiment 2, as described later, a main portion of the adapter-receiving component of the gas meter is enclosed in the mounting portion of the dust collection adapter 30. In Embodiment 2, where the adapter-receiving component is the shut-off valve 20 as in Embodiment 1 described above, the shut-off valve 20 is enclosed in the mounting portion of the dust collection adapter 30, and thus a part of the internal flow path 39 is formed by the outer surface of the adapter-receiving component (shut-off valve 20), the inner wall of the dust collection adapter 30, and the ribs 38.

For example, as shown in FIG. 8, the dust collection adapter 30 is mounted on the shut-off valve 20 which is the adapter-receiving component. FIG. 8 shows only the main body segment A31 as a component of the dust collection adapter 30. As previously described, the main body segment B32 is generally shaped to be symmetrical to the main body segment A31. The black-highlighted portions in FIG. 8 are portions where the main body segments A31 and B32 contact each other at their ribs 37 and 38 and outer walls. The details of the configuration of the shut-off valve 20 have been described in Embodiment 1 and will therefore not be described again in Embodiment 2.

As shown in FIG. 8, the shut-off valve 20 is enclosed in the mounting portion which is the upper portion of the main body of the dust collection adapter 30. Thus, as previously described, the outlet 24 of the shut-off valve 20 is opposed to the front inner wall surface 34b. There is a given gap between the outlet 24 of the shut-off valve 20 and the front inner wall surface 34b. The lower surface of the front portion of the shut-off valve 20 is opposed to the rib 38 that divides the mounting portion and the flow path portion from each other (for convenience of explanation, this rib 38 will be referred to as "first longitudinally-oriented rib 38"). There is also a given gap between the lower surface of the shut-off valve 20 and the longitudinally-oriented rib 38. In addition, the lower surface of the rear portion of the shut-off valve 20 is opposed to the rib 38 that extends in the up-down direction (for convenience of explanation, this rib 38 will be referred to as "vertically-oriented rib 38"). In other words, the vertically-oriented rib 38 extends upright with a gap between it and the lower surface of the rear portion of the shut-off valve 20.

Thus, the front inner wall surface 34b and the ribs 38 of the dust collection adapter 30 form a part of the internal flow path 39 (mounting portion flow path) that extends in front of and below the shut-off valve 20. As shown by the dashed arrows F1 in FIG. 8, once the shut-off valve 20 is opened, the gas flowing into the shut-off valve 20 through the inlet 23 is discharged through the outlet 24 and collides with the front inner wall surface 34b to diffuse inside the mounting portion.

Thus, for example, as shown by the dashed arrows F2 in FIG. 8, a gas stream is formed in the internal flow path 39 extending from the outlet 24 of the shut-off valve 20 along the front inner wall surface 34b and the first longitudinally-oriented rib 38. This gas stream is divided into two streams, one of which is a rear gas stream flowing out of the gap (mounting portion flow path) between the upper end of the vertically-oriented rib 38 and the lower surface of the shut-off valve 20 toward the rear flow outlet 36b and the other of which is a lower gas stream blocked by the upper end of the vertically-oriented rib 38 and moving downward (into the flow path portion).

A rib 38 that extends toward the front flow outlet 36a (for convenience of explanation, this rib 38 will be referred to as "second longitudinally-oriented rib 38") is continuous with the lower end of the vertically-oriented rib 38. Thus, as shown in FIG. 8, the front surface of the vertically-oriented rib 38, the upper surface of the second longitudinally-oriented rib 38, and the lower surface of the first longitudinally-oriented rib 38 form a part of the internal flow path 39 (first flow path). The lower gas stream flows along this flow path toward the front flow outlet 36a.

Furthermore, as shown by the dashed arrows F2 in FIG. 8, the rear gas stream is divided into two streams, one of which is a first rear gas stream flowing out of the flow outlet 36b located in the rear portion of the dust collection adapter 30 and the other of which is a second rear gas stream flowing downward along the vertically-oriented rib 38. As shown in FIG. 8, the rear surface of the vertically-oriented rib 38, the rear inner wall surface 34d, the lower inner wall surface 34c, and the lower surface of the second longitudinally-oriented rib 38 form a part of the internal flow path 39 (second flow path). The second rear gas stream flows along this flow path toward the front flow outlet 36a.

A longitudinally-oriented rib 38 is located also inside the flow outlet 36a (for convenience of explanation, this rib 38 will be referred to as "in-flow outlet rib 38"). Due to the presence of such an in-flow outlet rib 38, the first rear gas stream or the second rear gas stream is (or both are) divided into a plurality of gas streams which flow out of the flow outlet 36a. In FIG. 8, there are two in-flow outlet ribs 38, by which the first rear gas stream is divided into two streams. This is not limiting as at least one in-flow outlet rib 38 is sufficient and the second rear gas stream may be divided into a plurality of streams.

As shown in FIG. 8, the plurality of cylindrical ribs 37 are located in the internal flow path 39. As previously described, the ribs 38 function to form the internal flow path 39 together with the inner wall of the dust collection adapter 30, the adapter-receiving component such as the shut-off valve 20 on which the dust collection adapter 30 is mounted, etc. In contrast, the ribs 37 are arranged to allow the gas streams shown by the dashed arrows F2 to collide with the ribs 37. Thus, dust contained in the gas can be collected by the ribs 37. That is, the ribs 37 function to collect dust.

As previously described and shown by the dashed arrows F2, the gas flowing into the dust collection adapter 30 from the outlet 24 of the shut-off valve 20 flows through the mounting portion flow path formed by the front inner wall surface 34b and the ribs 38 and constituting a part of the internal flow path 39. As shown in FIG. 8, the ribs 37 are located also in the mounting portion flow path. The gas stream flowing through the mounting portion flow path is divided into the first rear gas stream that continues to flow through the mounting portion flow path, the lower gas stream that flows through the first flow path constituting a part of the internal flow path 39, and the second rear gas stream that flows through the second flow path constituting a part of the internal flow path 39. As shown in FIG. 8, the ribs 37 are located also in the first and second flow paths and in the mounting portion flow path through which the first rear gas stream flows.

As described above, the gas discharged from the shut-off valve 20 is divided into a plurality of gas streams flowing through different flow paths (or routes) in the dust collection adapter 30, collides with the ribs 37 located in the flow paths, and is discharged through the flow outlets 36a and 36b. Thus, dust contained in the gas is collected by the ribs 37.

Furthermore, in Embodiment 2, the internal flow path 39 includes: a route (mounting portion flow path) starting in front of the shut-off valve 20, passing along the side of and below the shut-off valve 20, and reaching behind the shut-off valve 20; and a reverse route bent in the vicinity of the rear of the shut-off valve 20, passing below the shut-off valve 20, and extending forward (i.e., in the direction in which the gas flows out of the shut-off valve 20) beyond the shut-off valve 20. In particular, in Embodiment 2, the reverse route is divided into the first and second flow paths. This ensures a sufficient length of flow path while achieving a compact configuration. The sufficient length of the internal flow path 39 makes it possible to include a sufficient number of ribs 37 that collect dust contained in the gas.

In the example of FIG. 8, a rib 37 that is in contact with or close to the shut-off valve 20 and another rib 37 opposed to the rib 37 that is in contact with or close to the shut-off valve 20 are located in a downstream region of the mounting portion flow path of the internal flow path 39, i.e., in proximity to the flow outlet 36b. This allows for division of the rear gas stream into the first and second rear gas streams as shown by the dashed arrows F2. Thus, not only the ribs 38 but also the ribs 37 function to divide a gas stream into a plurality of gas streams flowing through different flow paths.

In addition, in the example of FIG. 8, a plate-shaped rib 38 projects upward from a rear region of the lower inner wall surface 34c. A plurality of cylindrical ribs 37 are located in the vicinity of this plate-shaped rib 38. Like the ribs 37, the rib 38 projecting from the lower inner wall surface 34c is located to allow the second rear gas stream to collide with the rib 38, rather than to form the internal flow path 39. Thus, not only the ribs 37 but also the rib 38 function to collect dust. That is, the ribs 37 and 38 function to divide a gas stream into a plurality of gas streams flowing through different routes in the dust collection adapter 30 and at the same time function to collect dust by collision of the gas streams with the ribs 37 and 38.

The ribs 37 and 38 located in the internal flow path 39 are not limited to having particular features. For example, the dimensions of the ribs 37 and 38 may be chosen in view of a pressure loss which occurs in the internal flow path 39. Although the ribs 37 are cylindrical and the ribs 38 are plate-shaped in Embodiment 2, they are not limited to having such shapes. The ribs 37 may be plate-shaped, the ribs 38 may be cylindrical or pillar-shaped, or both the ribs 37 and 38 may have any other shape.

Furthermore, as previously described and shown in FIG. 7, there are a plurality of grooves 40 on the surfaces of some of the ribs 38 and the lower inner wall surface 34c. These grooves 40 also function to collect dust contained in the gas. Thus, in the dust collection adapter 30 according to Embodiment 2, the grooves 40 may be formed not only on the ribs 38 and the lower inner wall surface 34c but also on another inner wall surface or any other portion as long as the locations of the grooves 40 are such that the grooves 40 can collect dust effectively.

In addition, as shown in FIG. 8, the flow outlet 36b located on the rear surface of the upper portion of the dust collection adapter 30 not only functions to discharge the second rear gas stream but also functions to receive wires for power supply for driving the shut-off valve 20. Thus, an opening for wiring of the dust collection adapter 30 can be used as the flow outlet 36b, and this eliminates the need to form another opening as a gas flow outlet and prevents the dust collection adapter 30 from having a complicated configuration.

### [Example in which dust collection adapter is applied to gas meter]

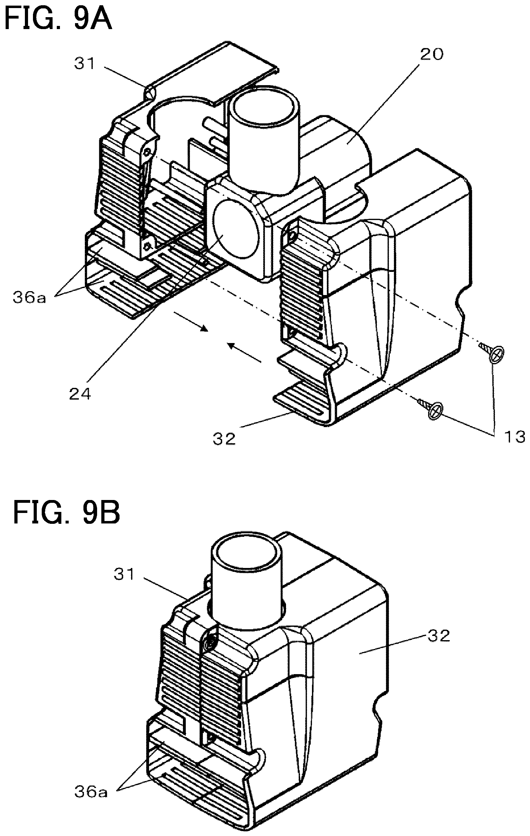

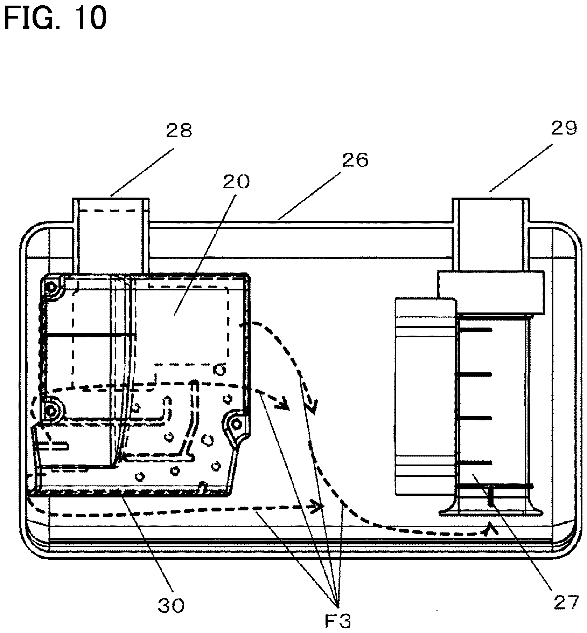

FIGS. 9A and 9B are perspective views showing an example of how the dust collection adapter 30 is mounted on the shut-off valve 20. FIG. 10 is a cross-sectional view showing an example of the gas meter 26 including the shut-off valve 20 on which the dust collection adapter 30 is mounted.

As shown in FIG. 9A, the dust collection adapter 30 is divided at the center into the two main body segments A31 and B32. In Embodiment 2, the main body segments A31 and B32 are made of resin. As previously described, the main body segments A31 and B32 are generally shaped to be symmetrical about a plane in which they are joined together.

In the example of FIG. 9A, the main body segments A31 and B32 are placed, respectively, on opposite sides of the shut-off valve 20 (for example, in the lateral direction) to face each other across the shut-off valve 20. Next, as shown in FIG. 9B, the main body segments A31 and B32 are mounted, respectively, on the opposite sides of the shut-off valve 20 and are joined together by means of screws 13. Thus, the main body segments A31 and B32 are combined to function as the dust collection adapter 30.

In Embodiment 2, as shown in FIG. 9B, the dust collection adapter 30 is attached to the shut-off valve 20 in such a manner that the mounting portion encloses the shut-off valve 20. Thus, unlike in Embodiment 1 described above, there is no need for the dust collection adapter 30 to include any gas flow inlet. In addition, as previously described, the periphery of the enclosed shut-off valve 20 can be used to form a part of the internal flow path 39.

As described above, the dust collection adapter 30 can be attached to the adapter-receiving component (shut-off valve 20) by placing the two separate main body segments A31 and B32 in such a manner as to hold the adapter-receiving component between the main body segments A31 and B32 and then joining the main body segments A31 and B32 together. Although in Embodiment 2 the main body segments A31 and B32 are joined together by means of the screws 13, the joining of the main body segments A31 and B32 is not limited to using the screws 13. For example, as in Embodiment 1 described above, another known joining means such as snap-fit or bonding with an adhesive can be used as appropriate.

As shown in FIG. 10, the gas meter 26 according to Embodiment 2 includes the shut-off valve 20 and the flow rate measurement unit 27. The gas meter 26 includes a housing, in which the shut-off valve 20 and the flow rate measurement unit 27 are enclosed. The dust collection adapter 30 according to Embodiment 2 is mounted on the shut-off valve 20.

The details of the configuration of the gas meter 26 are the same as those in Embodiment 1 described above, except for the differences between the dust collection adapter 30 and the dust collection adapter 10, and will therefore not be described again. The flow rate measurement unit 27 is not limited to having particular features. As in Embodiment 1 described above, typical examples of the flow rate measurement unit 27 include an ultrasonic measurement unit using ultrasonic propagation time measurement and an electronic measurement unit such as a thermal measurement unit.

In Embodiment 2, most of the shut-off valve 20 is enclosed in the dust collection adapter 30. Thus, once the shut-off valve 20 of the gas meter 26 is opened and a gas flows into the gas meter 26 through the gas inlet 28, the gas, as previously described, flows from the shut-off valve 20 to the internal flow path 39 of the dust collection adapter 30, passes through the internal flow path 39, and is discharged into the gas meter 26 through the flow outlets 36a and 36b. As shown by the dashed arrows F3 in FIG. 10, the gas emitted from the flow outlet 36a located on the front surface of the lower portion of the dust collection adapter 30 and the gas emitted from the flow outlet 36b located on the rear surface of the rear upper portion flow in the housing of the gas meter 26 and reach the flow rate measurement unit 27. The gas flows into the flow rate measurement unit 27 through the gas flow inlet, the gas flow rate is measured by the flow rate measurement unit 27, and the gas is discharged through the gas outlet 29.

As described above, the gas introduced into the gas meter 26 through the gas inlet 28 first passes through the internal flow path 39 of the dust collection adapter 30 and then is emitted into the gas meter 26 and flows into the flow rate measurement unit 27. Thus, dust contained in the gas is removed in the internal flow path 39 of the dust collection adapter 30 before the gas is emitted into the housing of the gas meter 26. Hence, the gas flowing into the flow rate measurement unit 27 can be considered, for example, to contain very little dust or to be substantially free of dust. This can reduce dust deposition on the measurement flow path of the flow rate measurement unit 27. As a result, the flow rate measurement unit 27 can successfully measure the gas flow rate over a long period of time.

### [Working mechanism of dust collection adapter]

The following will describe the working mechanism of the dust collection adapter 30 according to Embodiment 2 which is configured as described above.

In the internal flow path 39 of the dust collection adapter 30, as shown in FIG. 8, there are the ribs 38 which function as a part of the flow path and the ribs 37 which function to allow the flowing gas to collide therewith.

The gas flowing into the dust collection adapter 30 is deflected and divided into a plurality of streams by the ribs 38. Thus, the gas is diffused over the internal flow path 39 (or the interior of the dust collection adapter 30). The diffused gas meanders while colliding with the ribs 37 located in the internal flow path 39 and reaches the flow outlets 36a and 36b.

In a case where the gas contains dust, the collision of the gas with the ribs 37 leads to the contained dust being collected (removed) by the ribs 37. Since the flowing gas meanders due to the presence of the ribs 37, the duct collection takes place as the gas flows. Thus, the dust contained in the gas can be gradually removed by the ribs 37 and 38 during a period in which the gas flows from the shut-off valve 20 to the flow outlets 36a and 36b. In addition, as previously described, dust can also be collected by the grooves 40 formed on the ribs 38, the lower inner wall surface 34c, or any other portion.

### [Benefits of dust collection adapter]

As described above, in the present embodiment, the dust collection adapter 30 is mountable at the gas inlet 28 of the gas meter 26 and includes the internal flow path 39 located in the interior of the main body of the dust collection adapter 30 and the ribs 37 and 38 that are located in the internal flow path 39 and with which a gas introduced into the internal flow path 39 collides. The dust collection adapter 30 is mounted on the shut-off valve 20 which is an adapter-receiving component located at the gas inlet 28 of the gas meter 26.

Thus, dust contained in the gas can be successfully collected. This allows the flow rate measurement unit 27 of the gas meter 26 to perform reliable flow rate measurement over a long period of time. The internal flow path 39 has a sufficient passage area to ensure a relatively low pressure loss.

As in Embodiment 2, the main body of the dust collection adapter 30 may be divided into the two main body segments A31 and B32, and the dust collection adapter 30 may be mounted on the adapter-receiving component by coupling the two main body segments together.

In this case, for example, each of the main body segments A31 and B32 can easily be formed by resin molding. In addition, for example, the main body segments A31 and B32 can be joined together after they are placed so as to hold the adapter-receiving component therebetween, and this makes easier the mounting of the dust collection adapter 30 on the adapter-receiving component.

The adapter-receiving component may be the shut-off valve 20 located at the gas inlet 28 of the gas meter 26 to block a gas, and the gas passing through the shut-off valve 20 may be introduced into the internal flow path 39.

This eliminates the need for the gas meter 26 to include another adapter-receiving component. Thus, the gas meter 26 can be compactified.

### [Variants]

The details of the configuration of the dust collection adapter according to the present disclosure are not limited to those of the dust collection adapter 10 according to Embodiment 1 described above or the dust collection adapter 30 according to Embodiment 2 described above. The present disclosure encompasses various variants.

For example, the main body of the dust collection adapter is divided into two segments along a plane extending in the longitudinal direction and includes a left main body segment A11 or A31 and a right main body segment B12 or B32 when viewed from the front. However, the main body is not limited to having this configuration. The main body may be divided into three or more segments or may be divided along a plane extending in the vertical or lateral direction rather than the longitudinal direction.

The adapter-receiving component on which the dust collection adapter according to the present disclosure is mounted may be the shut-off valve 20 of the gas meter 26. However, the adapter-receiving component is not limited to the shut-off valve 20 and may be any component that permits gas introduction into the dust collection adapter.

In the dust collection adapter according to the present disclosure, the upper portion of the main body may be the mounting portion, and the lower portion of the main body may be the flow path portion. However, the mounting portion and the flow path portion are not limited to this arrangement. The flow path portion may be located in the lower portion of the main body, or the mounting portion or the flow path portion may be located in a side portion of the main body. The dust collection adapter may include a portion having a function different from those of the mounting portion and the flow path portion.

Thus, in another exemplary configuration, the dust collection adapter according to the present disclosure may include: an internal flow path that is located in the interior of a box-shaped main body and through which a gas coming from a gas meter flows; a mounting portion that is located in a portion (e.g., an upper portion) of the box-shaped main body and that is mounted on an adapter-receiving component of the gas meter; and a flow path portion that is located in another portion (e.g., a lower portion) of the main body and that includes an inner wall and a plurality of ribs projecting from the inner wall, the ribs including a dust-collecting rib that is located in the internal flow path and with which a flow of the gas collides.

In the dust collection adapter configured as described above, the internal flow path is located at least in the flow path portion. Alternatively, in the dust collection adapter configured as described above, the ribs may include a flow path-forming rib for forming the internal flow path. Alternatively, in the dust collection adapter configured as described above, the internal flow path may divide the flow of the gas coming from the gas meter into a plurality of streams.

In the dust collection adapter configured as described above, the mounting portion may include two portions between which the adapter-receiving component is held, and a part of the internal flow path may be located in the space where the adapter-receiving component is held by the mounting portion. Alternatively, in the dust collection adapter configured as described above, the mounting portion may enclose the adapter-receiving component, and the enclosed adapter-receiving component may form a part of the internal flow path together with the inner wall of the mounting portion surrounding the adapter-receiving component or with a rib located in the vicinity of the adapter-receiving component.

The above embodiments have been described to illustrate the technology of the present disclosure. Various modifications, replacements, additions, or deletions can be made insofar as they come within the scope of the appended claims or equivalents thereof.

From the foregoing description, numerous modifications and other embodiments of the present invention are obvious to those skilled in the art. Accordingly, the foregoing description is to be construed as illustrative only, and is provided for the purpose of teaching those skilled in the art the best mode for carrying out the present invention. The structural and/or functional details may be substantially modified without departing from the scope of the present invention.

### Industrial Applicability

The present disclosure is applicable widely and suitably in the field of gas meters for gas flow rate measurement. In particular, the present disclosure is suitably applicable to a situation where the gas which is the fluid to be measured by a gas meter can contain dust.

### Reference Signs List

10: dust collection adapter
11: main body segment A
12: main body segment B
13: screw
14a: upper inner wall surface
14b: front inner wall surface
14c: lower inner wall surface
14d: rear inner wall surface
14e: side wall inner surface
15: flow inlet
16a, 16b: flow outlet
17, 18: rib
19: internal flow path
20: shut-off valve (adapter-receiving component)
21: valve element
22: valve seat
23: inlet
24: outlet
25: protrusion
26: gas meter
27: flow rate measurement unit
28: gas inlet
29: gas outlet
30: dust collection adapter
31: main body segment A
32: main body segment B
34a: upper inner wall surface
34b: front inner wall surface
34c: lower inner wall surface
34d: rear inner wall surface
34e: side wall inner surface
36a, 36b: flow outlet
37, 38: rib
39: internal flow path
40: groove
F1 to F3: gas stream

## Claims

1. A dust collection adapter comprising:
a main body;
an internal flow path that is located in an interior of the main body and through which a gas flows; and
a plurality of ribs that are located in the internal flow path and with which the gas introduced into the internal flow path collides, wherein
the dust collection adapter is mounted on an adapter-receiving component located at an inlet of a gas meter.

2. The dust collection adapter according to claim 1, wherein
the main body is divided into two main body segments, and
the dust collection adapter is mounted on the adapter-receiving component by joining the main body segments together.

3. The dust collection adapter according to claim 2, wherein
the adapter-receiving component is a shut-off valve located at the inlet of the gas meter to block the gas, and
the gas passing through the shut-off valve is introduced into the internal flow path.
